# EUROPEAN PATENT APPLICATION

(11) **EP 2 114 032 A1**
(43) Date of publication of application: **04.11.2009**
(21) Application number: 08103790.5
(22) Date of filing: 30.04.2008
(51) Int. Cl.: H04L 12/14, H04M 15/00, H04M 17/00, H04L 12/24

(54) **Executing a decision about handling network resources caused by a notification "out of credit"**

(71) Applicant: Nokia Siemens Networks Oy, 02610 Espoo (FI)
(72) Inventor: Belling, Thomas, Dr., 85435 Erding (DE); Görmer, Gerald, 16352 Basdorf (DE); Schramm, Mirko, 13187 Berlin (DE)
(74) Representative: Bruglachner, Thomas E.

(57) **Abstract**

It is described a method for executing a decision about handling network resources (135) being currently used for a transmission of data to a User Equipment (140), wherein the data are associated with a service. The described method comprises receiving a message from a credit management control node (150), wherein the message indicates that the currently used credit for the service is the last credit, detecting that the last credit has been consumed, generating a trigger signal indicating the consumption, evaluating the trigger signal and executing, based on the evaluation of the trigger signal, a decision about handling the network resources (135) being currently used for the service. It is further described a network element (130) for a telecommunication network (100), a telecommunication network (100) and a computer program, which are adapted to perform the described network resources releasing method.

## Description

### Field of invention

The present invention relates to the field of charging procedures, charging systems and policy control for services being provided within telecommunication networks for instance by an application server to a User Equipment. In particular, the present invention relates to a method for executing a decision about handling network resources being currently used for a transmission of data to a User Equipment, wherein the data are associated with a service provided within a telecommunication network. Further, the present invention relates to a network element for a telecommunication network and to a telecommunication network, which are adapted to perform the described network resources handling method. Furthermore, the present invention relates to a computer program for executing a decision about handling network resources being currently used for a transmission of data to a User Equipment, wherein the data are associated with a service.

### Art Background

The 3rd Generation Partnership Project (3GPP) specifies the architecture and functionality for a) flow based charging (FBC) in TS 23.125 and for its successor b) policy and charging control (PCC) in TS 23.203. Both architectures and functionalities define a service flow based accounting and resource control in the Packet Switch (PS) domain. The architecture comprises a) an Application Function (AF), b) a Charging Rules Function (CRF) respectively a Policy and Charging Rules Function (PCRF) and c) a Traffic Plane Function (TPF) respectively a Policy and Charging Enforcement Function (PCEF).
a) The AF provides relevant service information such as for instance address information of the IP transport, codec information, application identifier and so on.
b) The CRF respectively the PCRF represents the controller in this architecture and derives out of the service information the control information for the TPF respectively the PCEF. Thereby, further information such as user subscription, operator policies and/or different tariff options may be taken into account.
c) The TPF respectively the PCEF identifies and treats IP packets belonging to flows of service data as instructed by the CRF respectively the PCRF with regard to policy enforcement and accounting and/or credit management. In addition, the TPF respectively the PCEF interact with the charging systems to forward the accounting information or to manage the credit account for the individual services. The charging system can be realized by means of an Online Charging System (OCS) and/or an Offline Charging System.

The granularity for which the FBC respectively the PCC functionality was defined is the so-called Charging Rule respectively the Policy and Charging Control Rule (PCC Rule). That means that the CRF respectively the PCRF sends to the TPF respectively the PCEF the control information as Charging Rules respectively the PCC Rules. There is typically one such rule configured per service but it is also possible to combine multiple services into a single rule if there is no individual treatment required. Each rule contains a) the necessary information for the detection of the service such as for instance packet filters for the IP transport information as well as b) control information for the accounting/credit management and policing information for the further processing of the IP packets.

For PCC, the Gx interface between PCRF and PCEF is specified in TS 29.212 and the Rx interface between PCRF and AF is specified in TS 29.214. For FBC, the Gx interface between CRF and TPF is specified in TS 29.210 and the Rx interface between CRF and AF is specified in TS 29.211.

In the following reference is made predominantly to the PCC terminology (i.e. PCRF, PCEF, PCC rule). However, the technical principles described within this application also apply for the FBC terminology (i.e. CRF, TPF, Charging Rule).

In case of Online Charging for service flows, the PCEF interacts with the OCS to manage credits for services. The first interaction takes place when the PCEF activates a PCC rule. The PCEF uses the so-called charging key (which is part of the PCC rule information) for the interaction with the OCS. It is possible to configure a separate charging key for each PCC rule but also to apply the same charging key for more than one PCC rule. In the latter case, the PCEF manages the consumption of the received credit for the various PCC rules with the same charging key. In the following, we assume that there is a PCC rule with a unique charging key and consequently, all actions are performed for a single PCC rule only.

The OCS receives a credit request for the PCC rule and either provides credit for it or not. If credit is rejected, the service cannot run in principle. This holds at least unless the service is however allowed by a more generic PCC rule for which credit was received before. If credit is provided, the corresponding service can run. Every time a packet of the service is detected, the credit for the corresponding PCC rule is reduced. Thereby, the principle varies slightly depending on the specific metering method which can be based on service data volume, on time for transfer of service data and/or on event. However, the specific metering method is not relevant for the invention described within this application.

When the credit has been almost consumed, the PCEF sends out another request for credit to the OCS to allow for a continuation of the service. The OCS would grant another credit for the PCC rule if the user account allows for it. This mechanism continues until either the service ends, the PCC rule is removed or the user account gets empty. The last situation could occur not only when the last money gets consumed but already earlier as typically several services are running in parallel and thus multiple credits have been granted by the OCS to the PCEF. So in fact, one service can no longer run while others are still allowed. Even though depending on the OCS implementation the OCS may try to re-authorize the granted credits to try to keep all services running by re-assigning the services in a different way, there will always be a point in time when the remaining user account is not high enough to continue with all currently running services.

When the PCEF is no longer receiving a credit for a PCC rule which is subject to online charging and the previously received credit was completely consumed, the PCEF performs the so-called termination action for this PCC rule. The termination action is configured in the PCEF but can be overwritten by the OCS. The following settings for a termination action are possible:
a) Allowing the packets, subject to the termination action, to pass through;
b) Dropping the packets, subject to the termination action;
c) Re-direction of packets, subject to the termination action, to an application server, which can for instance be defined in the termination action.

The above described known charging principles do not address how to treat the network resources, which have been used for a service wherein the service has been terminated because of running out of credit.

There may be a need for providing a charging and network control mechanism, which is capable of defining how to treat the network resources being associated with the terminated service.

### Summary of the Invention

This need may be met by the subject matter according to the independent claims. Advantageous embodiments of the present invention are described by the dependent claims.

According to a first aspect of the invention there is provided a method for executing a decision about handling network resources being currently used for a transmission of data to a User Equipment, wherein the data are associated with a service provided within the telecommunication network. The provided method comprises (a) receiving a message from a credit management control node, wherein the message indicates that the currently used credit for the service is the last credit, (b) detecting that the last credit has been consumed, (c) generating a trigger signal indicating the complete consumption, (d) evaluating the trigger signal and (e) executing, based on the evaluation of the trigger signal, a decision about handling the network resources being currently used for the service.

The described method for executing a decision about handling network resources is based on the idea that a network element within a telecommunication network, which network element is performing the described method, can evaluate the trigger signal based on special policies specified by the operator of a telecommunication network. By contrast to known termination actions, which are configured in the so called Policy and Charging Enforcement Function (PCEF) and which result in a continuous allocation of resources while the service is not charged, the described method may result in a deallocation of the network resources for which no further payment occurs. A continuous allocation of resources without any charging is especially critical in connection with bitrate resources guaranteed by the network operator for instance for a sufficient Quality of Service for voice transmission.

In this respect it is mentioned that throughout this application the term "network resources" may mean a) resources of the mobile telecommunication access portion of the whole telecommunication network, b) the resources in a transport respectively a backbone portion of the whole telecommunication network and/or c) a service portion of the whole telecommunication network.

Executing a decision about handling network resources may result in different actions. For instance the decision execution may comprise informing a User about the situation that there are no more credits available for a service provided for the User. The decision execution may further comprise that other services, which are currently used by the User of the User Equipment, are terminated in order to use not completely used credits for the currently used service. The decision about which service has the highest priority for the User can also be made be the User himself. Furthermore, the decision execution may comprise simply terminating the currently used service such that the corresponding network resources are released in a defined manner.

When implementing the described method in current standardized procedures for a service flow based accounting respectively credit management, new information elements will have to be introduced for controlling the behavior of the network element, which is performing the steps of the described method, in case of no longer receiving credit for a Policy and Charging Control Rule (PCC Rule) respectively a charging key. In this respect and throughout this application the term "PCC rule" is to be understood as a construct of data comprising information, how data streams being associated with a dedicated service have to be treated. A charging key is a component of a PCC rule, which has to be transferred from a network element performing the steps of the described method to the credit control management node. Thereby, the credit control management node knows how to read and how to interpret the charging key.

The described reception of a message from the credit management control node indicating that the currently provided credit for the service is the last credit means that there is no further credit available in the corresponding user account. In this respect it has to understood that the credit management control node administers an account for a user respectively a User Equipment, wherein the account balance is subdivided into a plurality of credits, which may successively be removed from the account respectively from the credit management control node and used for the purpose of accessing one or more services, which may be provided by one or by more than one application servers.

In other words, when the credit management control node indicates there is no further credit available, there is still the last credit which can be depleted for the use of the current service. In case there is currently more than one service active, there are still a corresponding number of credits existing, which can be depleted for the currently accessed services.

The User Equipment may be any type of communication end device, which is capable of connecting both with the network node and at least one of the neighboring network nodes by means of a wireless transmission link. In particular the User Equipment may be a cellular mobile phone, a Personal Digital Assistant (PDA), a Notebook computer and/or any other movable communication device.

According to an embodiment of the invention the step of executing the decision about handling the network resources comprises releasing network resources belonging to a network connection being used for the service. This may provide the advantage that the operator may allocate the released network resources completely to other Users respectively to other User Equipments. Thereby, the data throughput within the whole telecommunication network may be enhanced. This holds in particular for radio interfaces within the telecommunication network, which are typically more likely to be overloaded because of its limited data throughput.

According to a further embodiment of the invention the step of executing the decision about handling the network resources comprises downgrading the Quality of Service being provided for the service. This may have the effect that the data connection between the telecommunication network and the User Equipment is not completely cut off while the previously higher Quality of Service (QoS) can be used for other Users. This may provide the advantage that the user can still be provided with the service, however with a decreased QoS. In case of a service providing a download of images or video streams, the bitrate may be reduced resulting in a significant reduction of the resolution of the images. In case of a service providing a download of audio data such as music, the QoS class may be reduced resulting in a lower throughput and a longer time until the audio data is fully downloaded.

If the user decides to replenish his account such that there will be again credits available, it is not necessary to completely reestablish the data connection between the telecommunication network and the User Equipment.

According to a further embodiment of the invention the step of executing the decision about handling the network resources is carried out immediately after detecting that the last credit has been fully consumed. This may provide the advantage that the handling decision is performed immediately after a charging of the service is no more possible. For instance by quickly reallocating released resources for other purposes the operator of the telecommunication network can avoid a waste of network resources. In this respect for the operator's purpose a waste of network resources is present if there is no possibility for charging the provided network resources.

It has to be mentioned that in order to execute the decision about handling the network resource release as fast as possible, also the above specified intermediate steps of generating the trigger signal and evaluating the trigger signal have to be carried out without any delay.

According to a further embodiment of the invention the step of executing the decision about handling the network resources is carried out with a predefined time delay with respect to detecting that the last credit has been exhausted. This may provide the advantage that the data connection to the User Equipment will be open for a predetermined time interval which can for instance be used for providing the User respectively the User Equipment with information about the consequences of a subsequent termination of the data connection. This might motivate the User to replenish his account or to gracefully terminate the service, which is especially important for communication services.

In case more that one service is used by the User Equipment the residual time interval with an open data connection could be used by the User to terminate another service or other services and to use the corresponding released credit(s) for extending in time the current service.

The data connection may be for instance a so called Packet Data Protocol (PDP) Context. A PDP Context is a logical association between a User Equipment and a Public Data Network running across a GPRS network. The context defines aspects such as Routing, Quality of Service (QoS), Security, Billing etc.

According to a further embodiment of the invention at least some of the specified steps are carried out in a network element representing a Gateway of a telecommunication network. The Gateway may be in particular containing a so called Policy and Charging Enforcement Function (PCEF) unit or Traffic Plane Function (TPF) unit. When carrying out the present invention these units should be provided with new information elements for controlling its behavior in case of no longer receiving credit for a PCC rule respectively a charging key associated with a currently used service.

According to a further embodiment of the invention the evaluation of the trigger signal and/or the execution of the decision about handling network resources depends on information, which has been provided to the Gateway. This may mean that before the above described method is carried out, the Gateway is preconfigured with all necessary information in order to carry out in an effective manner a decision about handling the network resources.

The information respectively the information elements, which lead to the described pre-configuration of the Gateway and which control the Gateway's behavior in case of no longer receiving credit for a PCC rule or a charging key may comprise instructions about whether the network resources for the affected PCC rule or charging key have to be released and whether the control node such as for instance the PCRF unit needs to be informed about the event that there is no longer credit available for a PCC rule.

According to a further embodiment of the invention the information has been received from a control node. This may mean that the described pre-configuration of the Gateway is carried out by any network element, which is connected to the Gateway and which may act as control node for the Gateway. The control node can be for instance a Policy and Charging Rules Function (PCRF) unit or a Charging Rules Function unit.

It is further possible that the credit control management node can act as the control node.

In case the credit control management node provides the necessary information a termination action can be used to carry this information. This may means that the above mentioned information respectively information elements may become a part of a termination action information being provided by the credit management control node. Alternatively, it has to be mentioned that it is also possible that the information becomes part of the PCC rule information pre-configured in the PCEF or being provided by the PCRF.

According to a further embodiment of the invention the information about the evaluation of the trigger signal and/or the execution of the release of network resources has been received from a credit management control node. This may mean that the credit management control node, which may be for instance an Online Charging System, acts as controller for the behavior of the Gateway.

According to a further embodiment of the invention the step of evaluating the trigger signal comprises transmitting a notification from the Gateway to a control node of the Gateway, wherein the notification indicates that the last credit has been consumed. This may mean that the control node gets informed from the Gateway about the full consumption of the last available credit. After having been informed by the Gateway the control node may show a reaction according to a predefined policy of the operator of the telecommunication network. This reaction may also comprise doing nothing and leave the network resources unchanged at least for a predetermined time period.

Generally speaking, compared to known procedures dealing with an out of credit situation a notification from the Gateway to the Gateway's control node is introduced, wherein the notification informs the control node if the Gateway no longer has credit for a certain PCC rule. The notification may further indicate a corresponding termination action, which has been received by the Gateway from the credit management control node.

According to a further embodiment of the invention the step of evaluating the trigger signal further comprises receiving information from the control node, wherein the information is indicative for the evaluation of the trigger signal and/or for the execution of the decision about handling the network resources.

In other words, the notification from the Gateway to the control node preferably indicates the affected PCC rule where credit expired and the termination action. Upon reception of the notification the control node may react according to its policy, e.g. by requesting the Gateway to reduce or free resources allocated to service data flows with fully consumed credits.

According to a further embodiment of the invention the step of evaluating the trigger signal further comprises forwarding, by the control node, at least a portion of the notification to an application server.

Thereby, the application server might be informed from the control node about the release of the network resources. The application server may further get informed about the reason why the uplink traffic of the service between the User Equipment and the application server is discontinued.

According to a further embodiment of the invention the step of evaluating the trigger signal further comprises receiving, by the control node, at least a portion of the information being indicative for the evaluation of the trigger signal and/or for the execution of the decision about handling the network resources from the application server. This means that the information for the evaluation of the trigger signal is acquired by the Gateway by means of a two step procedure. Thereby, within a first step the Gateway connects to the control node in order to acquire the information. The control node itself forwards this request for the acquisition of the information to the application server. The application server then, within a second step, transmits this information via the control node to the Gateway. Thereby, the control node may modify (a) the respective data coming from the Gateway and being forwarded to the application server and/or (b) the data coming from the application server and being forwarded to the Gateway in an appropriate way. This means that at least some of the information being indicative for the evaluation of the trigger signal originates from the application server.

Generally speaking, when receiving a notification from the control node indicating a complete credit consumption for a given service, the application server (a) may inform the subscriber of the ongoing service and/or (b) may terminate the corresponding service by means of AF signaling and/or request the control node to free resources of services selected for termination. The mentioned AF signaling may be performed within a so called AF signaling session, wherein in the absence of media session information the corresponding signaling information is transmitted from the application server to the User Equipment.

According to a further embodiment of the invention the method further comprises forwarding, by the application server, at least a portion of the notification to a User Equipment. This may provide the advantage that the User can get infomed about the out of credit situation and possibly about the forthcoming actions with respect planned by the

According to a further aspect of the invention there is provided a network element for a telecommunication network, in particular a Gateway. The provided network element is adapted for performing the method as described above.

This further aspect of the invention is based on the idea that by evaluating the trigger signal following a run out of credit the network element can implement special policies specified by the operator of a telecommunication network. Thereby, a decision about handling network resources is executed.

It has to be mentioned that of course for some embodiments of the above described method the network element has to interact in an appropriate way with other network elements such as
(a) a credit control management node, (b) a control node for the described network element respectively the Gateway and/or
(c) an application server through the control node.

According to a further aspect of the invention there is provided a telecommunication network. The telecommunication network comprises (a) a network element as described above and (b) a credit management control node, which is connected with the network element.

The credit management control node, which might be for instance an Online Charging System (OCS), and the network element, which might be for instance a Gateway, can communicate with each other via a standardized Gy interface. The OCS may interact with the Gateway in real time or in near real time. The subscriber's account is decremented in some units based on current usage of the system. Charging may be based on events, time, or resource usage.

The telecommunication network may further comprise a control node, which is connected with the network element and an application server, which is connected with the control node. Thereby, all described network entities may interact with each other in an appropriate manner in order to be prepared to accomplish the above described method for executing a decision about handling network resources.

The service data may be transmitted between the above described application server and the User Equipment or between different User Equipments via an IP network and/or the gateway. This may provide the advantage that the user data flow within the IP network can be directed via a plurality of different wire based and wireless data transmission connections.

According to a further aspect of the invention there is provided a computer program for executing a decision about handling network resources being currently used for a transmission of data to a User Equipment, wherein the data are associated with a service. The computer program, when being executed by a data processor, is adapted for controlling the above described method.

This aspect of the present invention is based in the idea that any embodiment of the above described method can be implemented in standard hardware entities of a telecommunication network being provided with a charging system for services being provided to the User Equipment. Thereby, no hardware modification may be necessary.

As used herein, reference to a computer program is intended to be equivalent to a reference to a program element and/or to a computer readable medium containing instructions for controlling a computer system to coordinate the performance of the above described method.

The computer program may be implemented as computer readable instruction code in any suitable programming language, such as, for example, JAVA, C++, and may be stored on a computer-readable medium (removable disk, volatile or non-volatile memory, embedded memory/processor, etc.). The instruction code is operable to program a computer or other programmable device to carry out the intended functions. The computer program may be available from a network, such as the World-WideWeb, from which it may be downloaded.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

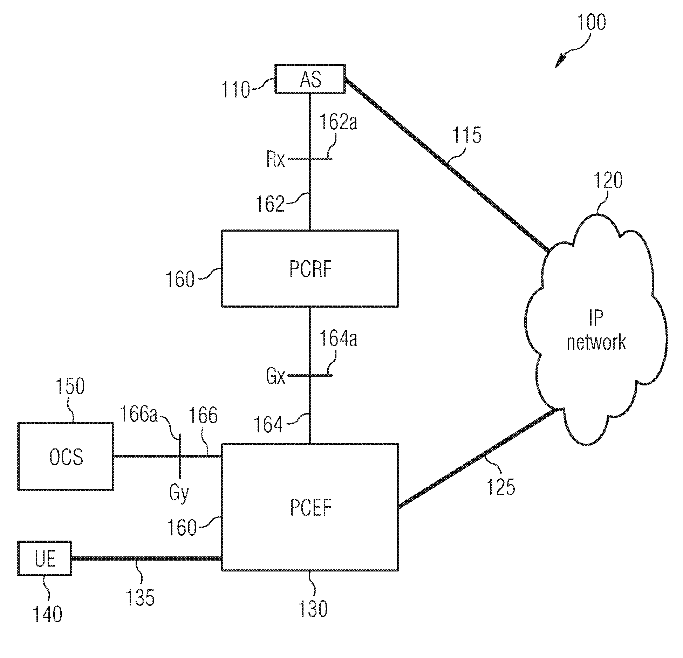

The only Figure shows a telecommunication network comprising a credit management control node and a Policy and Charging Enforcement Function unit, which are connected with each other and which are adapted for controlling the above described network resource release method.

### Detailed Description

The illustration in the drawing is schematically.

The accompanying Figure shows a telecommunication network 100. The telecommunication network 100 comprises an application server 110, which is adapter to provide a service to a mobile User Equipment 140. According to the embodiment described here the User Equipment is a cellular phone 140.

The application server 110 is connected to the User Equipment 140 via a first data transfer connection 115 connecting the application server 110 with an IP network 120, a second data transfer connection 125 connecting the IP network 120 with a Gateway 130 and a third data transfer connection 135 connecting the Gateway 130 with the User Equipment 140. In order to indicate in the Figure the service data transfer path between the application server 110 und the User Equipment 140 the three data transfer connections 115, 125 and 135 are drawn with bold lines.

The charging for the service being provided from the application server 110 to the User Equipment 140 is performed by a credit control management node 150. According to the embodiment described here the credit control management node is realized by means of an online charging system 150. The online charging system 150 is connected to the Gateway 130 via a first control line 166 being defined by a so called Gy interface 166a. The Gy interface 166a is specified in the 3GPP Technical Specification 32.299. The Gateway 130 is connected to a control node 160 via a second control line 164 being defined by a so called Gx interface 164a. The Gx interface 164a is specified in the 3GPP Technical Specifications 29.203 and 29.212. According to the embodiment described here the Gateway is a Policy and Charging Enforcement Function (PCEF) unit 130 and the control node is a Policy and Charging Rules Function (PCRF) unit 160. As can be seen from the Figure, the PCRF unit 160 is connected to the application server 110 via a third control line 162 being defined by a so called Rx interface 162a. The Rx interface 162a is specified in the 3GPP Technical Specifications 29.214.

In order to distinguish the control lines 166, 164 and 162, which are used for transmitting control data being related to a charging of the provided service, from the data lines 115, 125 and 145, the control lines 166, 154 and 162 are drawn with a normal line width.

The PCEF unit 130 is adapted to perform the above described network resource release method, which is carried out when the PCEF unit 130 detects, that a last credit provided by the Online Charging System 150 has been consumed. Following the detection that the last credit has been consumed, the PCEF unit 130 generates a trigger signal indicating the full consumption. This trigger signal is then evaluated by the PCEF unit 130. For the evaluation of the trigger signal new information elements are employed, which define the concrete behavior of the PCEF unit 130, if the PCEF unit 130 does no longer receive credits from the Online Charging System 150 and the last credit has been fully consumed. This new information can be provided to the PCEF unit 130 in three different ways a), b) and c).
a) The new information can be information which has already been provided to the PCEF unit 130 before the trigger signal has been generated. This can be seen as a type of pre-configuration of the PCEF unit 130. The new information can be provisioned to the PCEF unit 130 by the OCS unit 150 for instance associated with so called termination actions.
b) The new information can be provided to the PCEF unit 130 by means of a notification from the PCRF unit 160 to the PCEF unit 130. Of course, the transmission of such a notification needs a request from the PCEF unit 130 indicating that the last available credit has been exhausted.
c) The new information can be provided to the PCEF unit 130 by means of a two-hop notification originating from the application server 110 via the PCRF unit 160 to the PCEF unit 130. Of course, also the transmission of such a two-hop notification needs a corresponding two-hop request from the PCEF unit 130 to the application server 110 indicating that the last available credit has been exhausted.

It has to be mentioned that independent from the way how the PCEF unit 130 is provided with the new information elements, the method described with this application will result in a release of network resources. Thereby, the release of network resources may comprise a) terminating a network connection being used for the service, b) downgrading the Quality of Service being provided for the service or c) releasing of internal processing resources such as installed packet filters within the PCEF unit 130.

The described network resource release method can be implemented in the telecommunication network 100 shown in the accompanying Figure in different ways.

### 1) Implementation in PCC rule information

The encoding of a request from the PCRF to the PCEF in order to obtain a notification for credit expiry could use a new value for the enumerated Event-Trigger Attribute Value Pair (AVP). This would affect all PCC rules. The PCRF may send the Event-Trigger AVP with the new value for credit expiry to the PCEF to request to be informed when the credit for any PCC rule expires.

Information element(s) for controlling the PCEF behavior on credit expiry per PCC rule may be encoded by new AVP(s) added within the Charging-Rule-Definition AVP.

In a preferred embodiment, a new AVP with enumerated values is added to the Charging-Rule-Definition AVP. The enumerated values of this AVP would describe the appropriate actions of the PCEF. These action may be for instance a) a freeing of bearer resources allocated to service data flow described by the corresponding PCC rule, b) transmitting a Notification of the PCEF, and/or c) a reducing of the Quality of Service (QoS) of bearer resources allocated to service data flow described by the corresponding PCC rule.

The notification of the PCEF can be requested in combination with other actions by supplying the new AVP several times with other enumerated values.

In a preferred embodiment, the QoS applicable after credit expiry for a service data flow is provisioned by new AVPs within the Charging-Rule-Definition AVP of the corresponding PCC rule.

The notification from PCEF to PCRF may be encoded as a request for PCC rules, i.e. as Credit Control (CC) request with CC-Request-Type AVP set to the value "UPDATE REQUEST". Preferably, the Event trigger AVP with a new value indicating that credit for some PCC rules has expired is also included in the request for PCC rules to indicate the reason for the request.

Charging-Rule-Report AVP(s) containing the PCC-Rule-Status AVP may be included to indicate that the PCEF no longer has credit for the corresponding PCC rule(s). According to present procedures the Charging-Rule-Report AVP already indicates the affected PCC rule. Preferably, new values are defined for the enumerated PCC-Rule-Status AVP to indicate that credit expired for a PCC rule. Those values may encode the termination action in addition. Possible new values for the PCC-Rule-Status AVP could for instance indicate that
a) credit has expired and packets are still allowed,
b) credit has expired and packets are dropped or
c) credit has expired and packets are redirected.

When receiving a notification about a credit expiry for a PCC rule, the PCRF may decide to downgrade the QoS (the QoS Class Identifier and/or the bitrate) for that PCC rule, or for the bearer where the service data flow filtered by the PCC is transported. The PCRF may use existing Gx procedures to instruct the PCEF accordingly. Alternatively, the PCRF may remove the PCC rule, which can trigger the PCEF to reduce the bearer resources according to existing Gx procedures. The PCRF may also propagate the information about credit expiry to the application server. The application server may then instruct the PCRF about further related actions such as for instance by requesting the PCRF to disable a service and/or release all bearer resources related to a service.

### 2) Implementation in termination action information

The termination actions are part of the PCC functionality and allow the OCS to instruct the PCEF about how to treat the traffic when credit is no longer available for a charging key being used by one or more PCC rules which are all affected.

The currently existing termination actions, which either a) allow the data packets to pass through, b) drop the transmission of data packets or c) re-direct the data packets, are extended by new values for instructing the PCEF to release the resources belonging to the PCC rules and, if applicable, inform the PCRF.

Preferably, new values for the Final-Unit-Action AVP are defined describing the appropriate actions of the PCEF. These actions may be for instance a) a freeing of bearer resources allocated to service data flow described by the corresponding PCC rule, b) transmitting a Notification of the PCEF, and/or c) a reducing of the Quality of Service (QoS) of bearer resources allocated to service data flow described by the corresponding PCC rule.

### 3) Implementation of PCRF to AF information forwarding

The notification from the PCRF to an application server about a credit expiry may be performed using a "Diameter Re-Authentication Request (RAR)" or an "Abort Session Request (ASR) message" over the Rx interface. Preferably, the above described Specific-Action AVP with some new value is added. Possible new values for the Specific-Action AVP could for instance indicate that
a) credit has expired,
b) credit has expired and packets are still allowed,
c) credit has expired and packets are dropped, or
d) credit has expired and packets are redirected.

The affected service data flows may also be indicated by adding the Flows AVP to the RAR. The ASR is preferably used if the credit for all service data flows expired and the PCRF decided to terminate that service.

In a preferred embodiment, the application server also instructs the PCRF to be informed about credit expiry by provisioning the Specific-Action AVP with the new values.

Based on the notification of credit expiry, the application server could inform the subscriber using the signaling or media connection it has with the subscriber for instance by sending Session Initiating Protocol (SIP) signaling notifications or by playing appropriate inband announcements within transferred media such as speech or video.

The subscriber could react by deciding to terminate the service or other ongoing services to achieve the continuity of the most desired used services with the remaining credit.

The application server may also use signaling connections to terminate the service or other ongoing services. For instance, a P-CSCF acting as application server may send so called SIP BYE requests. In this respect the P-CSCF is the initial interface between the user equipment and the IP Multimedia Subsystem (IMS). The address of the P-CSCF is discovered either as part of Session Management procedures involved with establishing IP connectivity. That is, the address of the P-CSCF may be provided during the PDP Context Activation process. Alternatively it may be resolved after the PDP Context Activation process through the Dynamic Host Configuration Protocol (DHCP) Query/Response process. In this case the mobile will request an IP Address plus other variables in order to establish IP sessions.

The application server may also request the PCRF to free resources related to a service after credit expiry.

To select the service to be terminated, the application server may apply policies to keep some essential services intact but ending other services to make best usage of the remaining credit.

The above network resources release method described in this application may provide in particular the following advantages:
- The method enables the release of resources corresponding to services for which credit is no longer available.
- Furthermore, the method allows for transferring information about this event up to the application server which can now react in an appropriate way by for instance terminating the service, changing the service parameters to reduce the price, indicating to the user the lack of credit to e.g. achieve a termination of other services or user activities to re-charge the account in the OCS.
- The operator is more flexible to offer different services for the subscriber who could manage the combination of services based on his own decision regarding the available account. This may mean that the subscriber could make a kind of Charging Management by himself regarding the usage of the remaining account for the selected services.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

### List of reference signs:

- 100: telecommunication network
- 110: application server
- 115: first data transfer connection
- 120: IP network
- 125: second data transfer connection
- 130: network element / Gateway Policy and Charging Enforcement Function unit
- 135: third data transfer connection
- 140: User Equipment / cellular phone
- 150: credit control management node / online charging system
- 160: control node / Policy and Charging Rules Function unit
- 162: third control line
- 162a: Rx interface
- 164: second control line
- 164a: Gx interface
- 166: first control line
- 166a: Gy interface

## Claims

1. Method for executing a decision about handling network resources (135) being currently used for a transmission of data to a User Equipment (140), wherein the data are associated with a service, the method comprising
• receiving a message from a credit management control node (150), wherein the message indicates that the currently used credit for the service is the last credit,
• detecting that the last credit has been consumed,
• generating a trigger signal indicating the consumption,
• evaluating the trigger signal and
• executing, based on the evaluation of the trigger signal, a decision about handling the network resources (135) being currently used for the service.

2. The method as set forth in claim 1, wherein executing the decision about handling the network resources (135) comprises releasing network resources belonging to a network connection (135) being used for the service.

3. The method as set forth in claim 1, wherein executing the decision about handling the network resources (135) comprises downgrading the Quality of Service being provided for the service.

4. The method as set forth in any one of the claims 1 to 3, wherein executing the decision about handling the network resources (135) is carried out immediately after detecting that the last credit has been consumed.

5. The method as set forth in any one of the claims 1 to 3, wherein executing the decision about handling the network resources (135) is carried out with a predefined time delay with respect to detecting that the last credit has been consumed.

6. The method as set forth in any one of the preceding claims, wherein
at least some of the specified steps are carried out in a network element representing a Gateway (130) of a telecommunication network (100).

7. The method as set forth in claim 6, wherein
the evaluation of the trigger signal and/or the execution of the decision about handling network resources depends on information, which has been provided to the Gateway (130).

8. The method as set forth in claim 7, wherein
the information has been received from a control node (160).

9. The method as set forth in claim 7, wherein
the information has been received from a credit management control node (150).

10. The method as set forth in claim 7, wherein
evaluating the trigger signal comprises
• transmitting a notification from the Gateway (130) to a control node (160) of the Gateway (130), wherein the notification indicates that the last credit has been consumed.

11. The method as set forth in claim 10, wherein
evaluating the trigger signal further comprises
• receiving information from the control node (160), wherein the information is indicative for the evaluation of the trigger signal and/or for the execution of the decision about handling the network resources.

12. The method as set forth in claim 10, wherein
evaluating the trigger signal further comprises
• forwarding, by the control node (160), at least a portion of the notification to an application server (110).

13. The method as set forth in claim 12, wherein
evaluating the trigger signal further comprises
• receiving, by the control node (160), at least a portion of the information being indicative for the evaluation of the trigger signal and/or for the execution of the decision about handling the network resources from the application server (110).

14. The method as set forth in one of the claims 12 to 13, further comprising
• forwarding, by the application server (110), at least a portion of the notification to a User Equipment (140).

15. A network element for a telecommunication network (100), in particular a Gateway (130), the network element being adapted for performing the method as set forth in one of the preceding claims.

16. A telecommunication network comprising
• a network element (130) as set forth in claim 15 and
• a credit management control node (150), which is connected with the network element (130).

17. A computer program for executing a decision about handling network resources (125, 135) being currently used for a transmission of data to a User Equipment (110), wherein the data are associated with a service, the computer program, when being executed by a data processor, is adapted for controlling the method as set forth in any one of the claims 1 to 14.
